Europäisches Patentamt

European Patent Office

Office européen des brevets

(11) Veröffentlichungsnummer: **0 045 003**
B1

# (12) EUROPÄISCHE PATENTSCHRIFT

(45) Veröffentlichungstag der Patentschrift:
04.04.84

(21) Anmeldenummer: 81105486.5

(22) Anmeldetag: 14.07.81

(51) Int. Cl.³: **B 30 B 5/06**, B 29 C 27/14, B 29 D 3/00

(54) Vorrichtung zum kontinuierlichen Einsiegeln von Einlegeteilen.

(30) Priorität: 24.07.80 DE 3028052

(43) Veröffentlichungstag der Anmeldung:
03.02.82 Patentblatt 82/5

(45) Bekanntmachung des Hinweises auf die Patenterteilung:
04.04.84 Patentblatt 84/14

(84) Benannte Vertragsstaaten:
FR GB IT SE

(56) Entgegenhaltungen:
GB - A - 1 238 178
GB - A - 2 054 529
US - A - 2 991 214
US - A - 3 027 285
US - A - 3 737 359
US - A - 3 764 441
US - A - 3 798 107
US - A - 3 901 639

(73) Patentinhaber: **Held, Kurt, Alte Strasse 1,
D-7218 Trossingen 2 (DE)**

(72) Erfinder: **Held, Kurt, Alte Strasse 1,
D-7218 Trossingen 2 (DE)**

(74) Vertreter: **Ullrich, Thurmod, Dr., c/o Held Alte Strasse 1,
D-7218 Trossingen 2 (DE)**

BUNDESDRUCKEREI BERLIN

Vorrichtung zum kontinuierlichen Einsiegeln von Einlegeteilen

Die Erfindung betrifft eine Vorrichtung zum kontinuierlichen Einsiegeln von Einlegeteilen zwischen Folien aus Kunststoff, insbesondere zum Einsiegeln von Dokumenten, mit einer, zwei über je eine Einlaufrolle und eine Auslaufrolle geführte Preßbänder aufweisenden, Doppelbandpresse zum Erwärmen und Kühlen der Folien, mit je einer zwischen der Einlaufrolle und der Auslaufrolle an der von den Folien abgewandten Innenseite der Preßbänder angeordneten Temperiereinrichtung zum Zusammendrücken der Folien, mit einer vor der Einlaufseite der Doppelbandpresse angeordneten, Vorratsrollen für die Folien und eine Einbringeinrichtung für die Einlegeteile aufweisenden Folienzuführeinrichtung und mit einer anschließend an die Auslaufseite angeordneten Nachbearbeitungseinrichtung.

Um Ausweise, Scheckkarten oder sonstige Dokumente gegen Fälschungsmöglichkeiten sicher zu machen, hat man schon versucht, die Dokumente, auch Inlets genannt, in glasklare Kunststoff-Folien einzuschließen bzw. diese Dokumente mit solchen Folien zu umhüllen. Die Sicherheit gegen Fälschungen ist aber bei dieser Art der Umhüllung sehr gering, da nach dem Aufbrechen normaler Umhüllungen jederzeit die Möglichkeit zur Fälschung des in Frage stehenden Dokuments besteht. Außerdem ist das Umhüllen von Dokumenten durch Verschweißen der Außenkanten übereinanderliegender Umhüllungsfolien ein sehr zeit- und arbeitsaufwendiges Verfahren.

So ist aus der US-PS 3 737 359 eine Maschine zum Einschließen von Dokumenten und dergleichen zwischen Kunststoff-Folien bekannt. Die einzuschließenden Gegenstände werden zwischen einer oberen und einer unteren Folie zwischen zwei Heizwalzen eingeführt. Ein besonderer Preßdruck, insbesondere ein Flächendruck kann dabei nicht auf das einzuschließende Gut ausgeübt werden.

Außer gestanzten Inlets für Ausweise oder Kreditkarten können auch andere bahnförmige Werkstoffe z. B. aus Papier, Geweben, Metall, Faservliesen u. ä. eingesiegelt oder eingebettet werden. Das Heranführen der Folien erfolgt von Vorratsrollen über Umlenkrollen in die Presse.

Neben thermoplastischen Schichten als Siegelfolie können härtbare Tränk- und Klebeharze über die Folienumlenkrollen aufgebracht werden. Die Folien-Umlenkrollen haben in diesem Falle die Funktion und Ausführung an sich bekannter Walzwerke für den Naßauftrag von Harzen und Lösungen, und der von der Trägerbahn umschlungene Heiz- oder Kühltrommelumfang dient über die Verweilzeit einer regelbaren Wärmezu- oder Abfuhr.

Die Aufgabe der vorliegenden Erfindung besteht nun darin, eine Vorrichtung anzugeben, mit der es möglich ist, ein einwandfreies Bearbeiten von Thermoplast- und Duroplastfolien oder anderen Materialbahnen mit Einlegestücken, insbesondere ein fälschungssicheres Einsiegeln von Dokumenten aller Art bei sehr hohen Preßdrücken und sehr hohen Stückleistungen zu bewerkstelligen. Dabei kann man sich, soweit es den konstruktiven Aufbau der nach dem Doppelbandprinzip arbeitenden Heiß-Siegelpresse anbetrifft, ähnlicher Vorrichtungen bedienen, wie sie beispielsweise in der DE-OS 2 737 629 oder DE-AS 2 735 142 beschrieben sind.

Die Lösung der Aufgabe wird erfindungsgemäß durch die technische Lehre vermittelt, daß vor den beheizbaren Einlaufrollen je eine um die Drehachse der Einlaufrolle auf drehbar gelagerten Armen schwenkbare Umlenkrolle für jede der beiden Folien angeordnet ist, daß die Einbringeinrichtung als schwenk- und verschiebbarer mit dem oberen Preßband synchron gesteuerter Vakuumanleger für die flachen Einlegeteile ausgebildet ist und daß die Nachbearbeitungseinrichtung aus einer Stanzpresse mit einer Stapeleinrichtung und einem Abfallstreifensammler besteht. Die jeweilige Temperatur der beheizten Einlaufrollen der Doppelbandpresse wird mittels durchgeleitetem Thermoöl auf +/−1°C gehalten.

Die Umlenkrollen für die zuzuführenden Deckfolien sind von um die Achsmittelpunkte der Einlaufrollen drehbar gelagerten Armen getragen und radial nach oben bzw. nach unten zum Variieren der Umschlingungsfläche der Folien oder Bahnen auf den Oberflächen der beheizten Einlaufrollen schwenkbar angeordnet. Der Vakuumanlegeschieber ist zum Abheben von jeweils sechs genau ausgerichteten Inletstapeln oder sonstigen Einlegestücken eingerichtet.

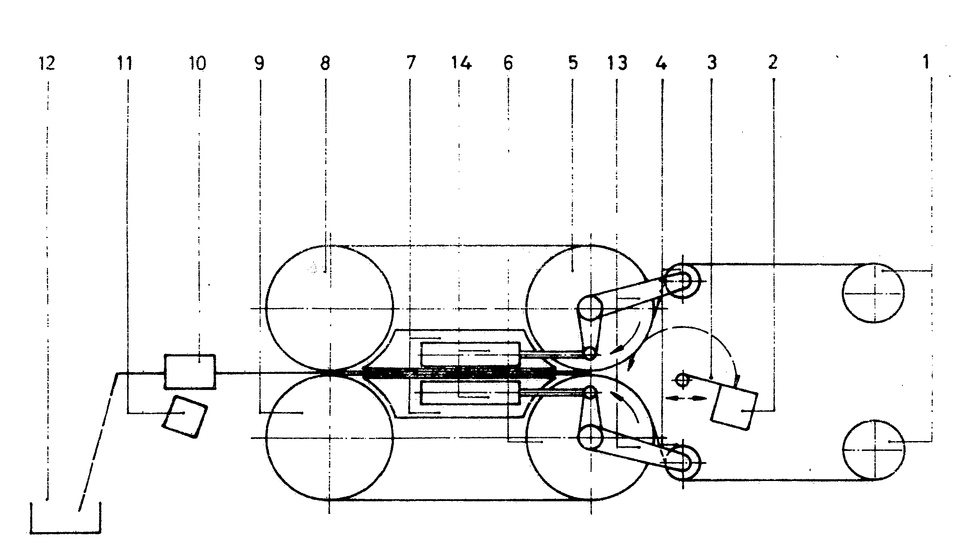

Die Zeichnung zeigt schematisch eine Maschineneinrichtung gemäß Erfindung.

Die Deckfolien werden von den Rollen 1 über Umlenkrollen 4 in den durch die beheizten Einlaufrollen 5, 6 gebildeten Walzspalt eingezogen. Die Umlenkrollen 4 sind zu den beheizten Einlaufrollen 5, 6 so angeordnet, daß eine für die Beheizung der Folie auf Siegeltemperatur ausreichende Umschlingung gesichert ist. Die Temperatur der Umlenktrommeln 5, 6 wird mit durchgeleitetem Thermoöl auf +/−1°C gehalten.

Die Foto-Inlets werden von einem Vakuum-Anlegeschieber 3 von mehreren, z. B. sechs genau ausgerichteten Stapeln 2 abgehoben, um ca. 180 Grad in die Waagrechte geschwenkt und unter Anschlag auf am Umlenktrommelrand angebrachte Synchronisieranschläge in den klemmenden Walzenspalt eingeschoben. Der Anlegeschieber 3 wird kurzzeitig belüftet, zurückgeholt und zur Aufnahme der nächsten Foto-Inlets geschwenkt. Nach Eintritt der Folien zwischen die beheizten Prägebänder, von denen mindestens das obere über Bandkantenverzahnung auf die Synchronanschläge an der Umlenktrommel synchronisiert ist, in die Reaktionszone oder Druckzone 7, wird den Prägebändern die Wärme von auf der Bandrückseite streichenden Kühlbürsten entzogen.

Die an den Treibrollen 8, 9 austretende gesiegelte Bahn wird von einem Hell-Dunkel-Sensor nach der Vorderkante der ersten Inletreihe abgetastet, nach der Sensierung wird die Bahn von der Stanzpresse 10 geklemmt, die Ausweise werden ausgestanzt und in mehreren, z. B. sechs höhengesteuerten Stapeln 11 aufgefangen. Der ausgestanzte Streifen wird um einen Nutzen versetzt abgehackt und in einem Behälter 12 aufgefangen.

Mit Hilfe pneumatischer oder hydraulischer Mittel, beispielsweise der Zylinder 14, können die die Umlenkrollen 3, 4 tragenden Arme 13 nach oben oder unten verstellt und somit die Umschlingungsfläche der Folien oder Bahnen auf den beheizbaren Einlaufrollen 5, 6 vergrößert oder verkleinert werden.

Die Anlage läuft bis auf das Be- und Entladen der Stapel 2 und 11 der Einlegestücke oder Inlets und das Aufspannen der Folien- oder Materialbahnrollen 1 und die Abfallentfernung bei 12 automatisch.

Die beiden Polyäthylen-Heiß-Siegelfolien können auch durch ein Polyäthylen-Laminat ersetzt werden. Eine Alternative zu der beschriebenen Verfahrenstechnik besteht darin, die beiden Polyäthylen-Heiß-Siegelfolien durch ein Polyäthylen-Laminat zu ersetzen, das die Foto-Inlets auf einer harzgetränkten Trägerbahn und unter einer vorgelierten Polyäthylen-Deckschicht in ein Duroplastlaminat einbettet.

Eine solche Karte wäre mit keinem Mittel ohne bis zur Einzelfaser des Inlets gehende Zerstörung zu öffnen, gegen Lösungsmittel ebenso beständig wie Polybutylenterephthalat-Folie, als Duroplast thermisch nicht mehr beeinflußbar und von der Haftung des Polybutylenterephthalat-Polyäthylen-Verbundes unabhängig.

**Patentansprüche**

1. Vorrichtung zum kontinuierlichen Einsiegeln von Einlegeteilen zwischen Folien aus Kunststoff, insbesondere zum Einsiegeln von Dokumenten, mit einer, zwei über je eine Einlaufrolle (5, 6) und eine Auslaufrolle (8, 9) geführte Preßbänder aufweisenden, Doppelbandpresse zum Erwärmen und Kühlen der Folien, mit je einer zwischen der Einlaufrolle (5, 6) und der Auslaufrolle (8, 9) an der von den Folien abgewandten Innenseite der Preßbänder angeordneten Temperiereinrichtung (7) zum Zusammendrücken der Folien, mit einer vor der Einlaufseite der Doppelbandpresse angeordneten, Vorratsrollen (1) für die Folien und eine Einbringeinrichtung (3) für die Einlegeteile aufweisenden Folienzuführeinrichtung und mit einer anschließend an die Auslaufseite angeordneten Nachbearbeitungseinrichtung (10), dadurch gekennzeichnet, daß vor den beheizbaren Einlaufrollen (5, 6) je eine um die Drehachse der Einlaufrolle (5, 6) auf drehbar gelagerten Armen (13) schwenkbare Umlenkrolle (4) für jede der beiden Folien angeordnet ist, daß die Einbringeinrichtung als schwenk- und verschiebbarer mit dem oberen Preßband synchron gesteuerter Vakuumanleger (3) für die flachen Einlegeteile ausgebildet ist und daß die Nachbearbeitungseinrichtung aus einer Stanzpresse mit einer Stapeleinrichtung und einem Abfallstreifensammler besteht.

2. Vorrichtung nach Anspruch 1, dadurch gekennzeichnet, daß die jeweilige Temperatur der beheizten Einlaufrollen (5, 6) der Doppelbandpresse mittels durchgeleitetem Thermoöl auf +/ —1°C gehalten wird.

3. Vorrichtung nach Anspruch 1 und 2, dadurch gekennzeichnet, daß die Synchronsteuerung des Vakuumanlegers (3) über Anschläge an der Kante der beheizten Einlaufrolle (5, 6) der Doppelbandpresse erfolgt.

4. Vorrichtung nach Anspruch 1 bis 3, dadurch gekennzeichnet, daß der Vakuumanleger (3) zum Abheben von sechs genau ausgerichteten Einlegeteilen eingerichtet ist.

**Claims**

1. Apparatus for the continous sealing-in of insert parts between films of synthetic material, particularly for the sealing-in of documents, with a double-band press, which displays two press bands each guided over a respective entry roller (5, 6) and a respective exit roller (8, 9), for the heating and cooling of the films, with a respective tempering equipment (7), which is arranged each time between the entry roller (5, 6) and the exit roller (8, 9) and the inward side of the press bands remote from the films, for the compression of the films, with a film feed equipment displaying supply rollers (1), arranged in front of the entry side of the double-band press, for the films and an input equipment (3) for the insert parts and with a finishing equipment (10) arranged adjacent to the exit side, characterised thereby, that a respective deflecting roller (4), which is pivotable on rotatably borne arms (13) about the rotational axis of the entry roller (5, 6), is arranged for each of both the films in front of the heatable entry rollers (5, 6), that the input equipment is constructed as pivotable and displaceable vacuum feeder (3), controlled synchronously with the upper press band, for the flat insert parts and that the finishing equipment consists of a punching press with a stacking equipment and a waste strip collector.

2. Apparatus according to claim 1, characterised thereby, that the respective temperature of the heated entry rollers (5, 6) of the double-band press is held to +/—1 degree Centigrade by means of thermal oil conducted therethrough.

3. Apparatus according to claim 1 and 2, characterised thereby, that the synchronisation of the vacuum feeder (3) takes place by way of abutments at the edge of the heated entry roller (5, 6) of the double-band press.

4. Apparatus according to claim 1 to 3, characterised thereby, that the vacuum feeder (3) is equipped for the lifting-off of six exactly aligned insert parts.

**Revendications**

1. Dispositif pour le scellement en continu d'éléments insérés entre des feuilles de matière synthétique, notamment le scellement de documents, avec une presse à double bande, comportant deux bandes de pressage, guidées chacune sur un rouleau d'entrée (5, 6) et sur un rouleau de sortie (8, 9), pour chauffer et refroidir les feuilles avec, pour chaque bande, une installation de mise à température (7), disposée entre le rouleau d'entrée (5, 6) et le rouleau de sortie (8, 9), sur le côté intérieur des bandes de pressage éloigné des feuilles et pour la compression des feuilles entre elles, avec bobine (1) d'approvisionnement des feuilles disposé devant le côté d'entrée de la presse à double bande, et une installation d'amenée des feuilles, comportant une installation d'amenée pour les documents à insérer, et avec un dispositif de traitement final (10) raccordé au côté sortie de la presse, dispositif caractérisé en ce que, en avant de chacun des rouleaux d'entrée chauffés (5, 6) est prévu un rouleau de renvoi (4) pour chacune des deux feuilles, monté pour pivoter sur des bras (13) supportés à rotation autour de l'axe des rouleaux d'entrée (5, 6), l'installation d'introduction pour les pièces d'insertion plates, étant constituées d'un organe d'application de vide (3), pivotable et coulissant, commandé en synchronisme avec la bande supérieure, l'installation de traitement final consistant en une presse d'estampage avec une installation d'empilage et un collecteur de chutes de bandes.

2. Dispositif suivant la revendication 1, caractérisé en ce que la température des rouleaux d'entrée chauffés de la presse à double bande est maintenue à ±1°C au moyen d'huile de chauffage en circulation.

3. Dispositif suivant l'une quelconque des revendications 1 et 2, caractérisé en ce que la synchronisation de commande de l'organe d'application de vide (3) est réalisée par des butées prévues sur le bord des rouleaux d'entrée (5, 6) de la presse à double bande.

4. Dispositif suivant l'une quelconque des revendications 1 à 3, caractérisé en ce que l'organe d'application de vide (3) est prévu pour le soulèvement de six pièces d'insertion exactement alignées.